# EUROPÄISCHE PATENTSCHRIFT

(11) **EP 0 420 920 B1**
(45) Veröffentlichungstag und Bekanntmachung des Hinweises auf die Patenterteilung: **10.03.1993**
(21) Anmeldenummer: 89907733.3
(22) Anmeldetag: 23.06.1989
(51) Int. Cl.: B60L 5/20

(54) **KOHLELEISTE FÜR STROMABNEHMER**
CARBON BRUSH FOR COLLECTOR
BALAI DE CHARBON POUR BALAI CONDUCTEUR

(30) Priorität: 23.06.1988 DE 3821253
(43) Veröffentlichungstag der Anmeldung: 10.04.1991
(73) Patentinhaber: HOFFMANN & CO. ELEKTROKOHLE GESELLSCHAFT M.B.H., A-4823 Steeg (AT)
(72) Erfinder: HOFFMANN, Peter, A-4823 Steeg (AT); HÖLL, Johann, A-4830 Hallstatt (AT); GRABNER, Herbert, A-4820 Bad Ischl (AT); REISER, Klaus, A-4820 Bad Ischl (AT)
(74) Vertreter: Glawe, Delfs, Moll & Partner
(86) Internationale Anmeldenummer: EP8900708
(87) Internationale Veröffentlichungsnummer: WO8912559

(56) Entgegenhaltungen:
- DE-C- 697 808
- DE-U- 8 716 985
- DE-U- 8 803 377

## Beschreibung

Die Erfindung betrifft eine Kohleleiste von der im Oberbegriff des Anspruchs 1 angegebenen Art. Bei einer aus DE-GM 87 16 985 bekannten Kohleleiste dieser Art ist die Anschlußleitung als Metallgewebeband oder Metallfolie ausgebildet und in eine schwalbenschwanzförmige Ausnehmung der Kohleleiste mechanisch eingeklemmt. Hierbei werden die mechanische und die elektrische Verbindung der Anschlußleitung mit der Kohleleiste teilweise durch den Klemmsitz der Anschlußleitung in der Ausnehmung und teilweise durch die die Anschlußleitung überdeckende, galvanisch aufgebrachte Metallschicht bewirkt. Der Klemmsitz der Anschlußleitung in der Ausnehmung ist aber von Herstellungstoleranzen stark abhängig und kann über die Länge der Kohleleiste schwanken, so daß es schwierig ist, eindeutig definierte Werte für die Festigkeit der mechanischen Verbindung und für den Übergangswiderstand der elektrischen Verbindung zu erhalten.

Aus DE-OS 34 05 674 ist eine Kohleleiste bekannt, die an ihrer Unterseite oder in einer Nut der Unterseite eine galvanisch aufgebrachte Metallschicht aufweist, an die ein Metallgewebeband oder eine Metallfolie als Anschlußleitung angelötet ist. Das Löten erfordert jedoch einen zusätzlichen Bearbeitungsschritt, und außerdem werden durch die Löttemperatur Spannungen zwischen der galvanisch aufgebrachten Metallschicht und der Kohleunterseite wegen der unterschiedlichen Wärmedehnungen erzeugt, die unter Umständen zur Ablösung der Metallschicht führen können.

Der Erfindung liegt die Aufgabe zugrunde, eine Kohleleiste der genannten Art mit einer verbesserten mechanischen und elektrischen Verbindung der Anschlußleitung mit der Kohleleiste anzugeben.

Die Lösung der Aufgabe ist im Anspruch 1 angegeben.

Erfindungsgemäß ist die Anschlußleitung nicht in die Ausnehmung der Kohleleiste eingeklemmt, sondern in die die Ausnehmung ausfüllende galvanische Metallisierung eingebettet. Man erhält hierdurch nicht nur den Vorteil einer verbesserten mechanischen und elektrischen Verbindung der Anschlußleitung mit der Kohleleiste, sondern den weiteren Vorteil, daß die Form der Anschlußleitung nicht auf die Form der Ausnehmung abgestimmt zu sein braucht und daß zum Anbringen der Anschlußleitung kein besonderes Druckwerkzeug zum Einklemmen erforderlich ist. Die Anschlußleitung braucht nicht die Form eines Metallgewebebandes oder einer Metallfolie zu haben, sondern kann z. B. auch in Form eines oder mehrerer Drähte ausgebildet werden. Zwei Ausführungsformen für eine erfindungsgemäße Kohleleiste sind in der Zeichnung im querschnitt dargestellt.

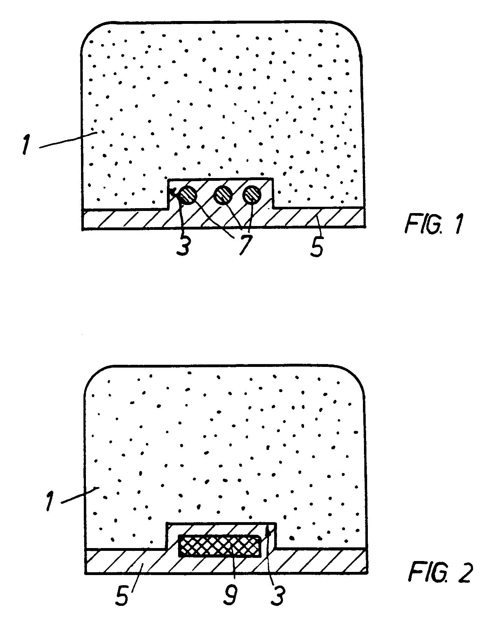

Gemäß Fig. 1 hat die Kohleleiste 1 an ihrer Unterseite eine Ausnehmung 3 und eine galvanisch aufgebrachte Metallschicht 5, vorzugsweise eine Kupferschicht. Die Metallschicht füllt die Ausnehmung 3 vollständig aus. Im Bereich der Ausnehmung 3 sind in die Metallschicht 5 Drähte 7 eingebettet. Die Drähte 7 und die Metallschicht 5 besorgen gemeinsam den Stromtransport in Längsrichtung der Kohleleiste 1.

Gemäß Fig. 2 ist in der Ausnehmung 3 der Kohleleiste 1 ein Metallgeflechtband 9 so angeordnet, daß es nicht durch Einklemmung, sondern durch die Einbettung in die galvanische Metallschicht 5 gehalten wird.

Die Herstellung der erfindungsgemäßen Kohleleiste erfolgt vorzugsweise derart, daß in einem ersten Galvanisierungsvorgang die Innenflächen der Ausnehmung, die in die Kohleleiste eingefräst oder beim Pressen eingeformt worden ist, mit einer Kupferbeschichtung versehen werden, dann der Anschlußleiter in Form eines oder mehrerer Kupferdrähte oder eines Kupferbandes 9 eingelegt wird und dann in einem zweiten Galvanisierungsvorgang eine zweite Kupferschicht auf die Unterseite der Kohleleiste und auf den Anschlußleiter so aufgebracht wird, daß sie sich mit der zuerst aufgebrachten Kupferbeschichtung verbindet und den Anschlußleiter allseitig einbettet.

Die erfindungsgemäße Kohleleiste kann in an sich bekannter Weise mit einem sie auf ihrer Länge abstützenden Träger verbunden werden. An mindestens einem Ende des Trägers ist dann ein elektrisches Anschlußelement vorgesehen, welches mit der Metallschicht 5 und/oder den Drähten 7 bzw. dem Metallband 9 durch mechanische Befestigung und/oder Anlöten kontaktmäßig verbunden wird. Die erfindungsgemäße Kohleleiste eignet sich besonders zur Verwendung mit einem Träger, der ganz oder teilweise aus Kunststoff besteht.

## Patentansprüche

1. Kohleleiste (1) für Stromabnehmer, die an ihrer Unterseite eine galvanisch aufgebrachte Metallschicht (5) und mindestens eine längsverlaufenden Anschlußleiter (7) aufweist, der in einer Ausnehmung (3) der Kohleleiste (1) angeordnet und von der Metallschicht (5) überdeckt ist, dadurch **gekennzeichnet**, daß auch die Ausnehmung (3) von der galvanisch aufgebrachten Metallschicht (5) ausgefüllt und der Anschlußleiter (7) durch Einbettung in die ihn allseitig umgebende Metallschicht (5) mit der Kohleleiste (1) mechanisch verbunden ist.

2. Kohleleiste nach Anspruch 1, dadurch **gekennzeichnet**, daß als Anschlußleiter einer oder mehrere Drähte (7) vorgesehen sind.

## Claims

1. A carbon strip (1) for current collectors, which on its underside has a galvanically applied metal layer (5) and at least one longitudinally extending connecting conductor (7) which is disposed in a recess (3) of the carbon strip (1) and is overlapped by the metal layer (5), characterised in that the recess (3) is also filled with the galvanically applied metal layer (5) and the connecting conductor (7) is mechanically connected with the carbon strip (1) by being embedded in the metal layer (5) which surrounds it on all sides.

2. A carbon strip according to Claim 1, characterised in that one or more wires (7) are provided as the connecting conductor.

## Revendications

1. Semelle de charbon (1) pour pantographe, présentant, sur son côte inférieur, une couche métallique (7) déposée par galvanoplastie et au moins un conducteur de raccordement (7), qui s'étend longitudinalement, est disposé dans un creux (3) de la semelle de charbon (1) et est recouvert par la couche métallique (5), caractérisée en ce que le creux (3) est également rempli par la couche métallique (5) déposée par galvanoplastie et le conducteur de raccordement (7) est relié mécaniquement à la semelle de charbon (1) par inclusion dans la couche métallique (5) qui l'entoure de toutes parts.

2. Semelle de charbon selon la revendication 1, caractérisée en ce qu'il est prévu, comme conducteur de raccordement, un ou plusieurs fils métalliques (7).
